# FASCICULE DE BREVET EUROPEEN

(11) **EP 2 048 064 B1**
(45) Date de publication et mention de la délivrance du brevet: **09.01.2013**
(21) Numéro de dépôt: 08166340.3
(22) Date de dépôt: 10.10.2008
(51) Int. Cl.: B62D 25/08, B60R 19/24

(54) **Procédé de construction d'un véhicule automobile.**
Verfahren zur Herstellung eines Kraftfahrzeugs
Method of manufacturing an automobile.

(30) Priorité: 10.10.2007 FR 0758184
(43) Date de publication de la demande: 15.04.2009
(73) Titulaire: Faurecia Bloc Avant, 92000 Nanterre (FR)
(72) Inventeur: Lentz, Michel, 25400, EXINCOURT (FR); Bierjon, Didier, 25400, AUDINCOURT (FR)
(74) Mandataire: Blot, Philippe Robert Emile

(56) Documents cités:
- EP-A- 1 352 811
- EP-A- 1 772 352

## Description

La présente invention concerne un procédé de construction d'un véhicule automobile dans lequel on assemble à l'extrémité avant d'un châssis de véhicule automobile une face avant destinée à supporter un radiateur et/ou un groupe moto ventilateur, une poutre de pare-choc avant, une peau de pare-choc et un renfort de peau de pare-choc destiné à être recouvert par la peau de pare-choc et à fournir un appui pour la peau de pare-choc.

Pour améliorer la qualité perçue par l'utilisateur d'un véhicule automobile, il est important de maîtriser la mise en référence de la peau de pare-choc avec les éléments apparents adjacents du véhicule automobile, notamment les blocs optiques, les ailes, et le capot moteur.

EP 1 352 811 A1 décrit un procédé de construction d'un véhicule automobile du type précité, dans lequel on forme un premier module dit « structurel » en fixant la poutre de pare-choc sur la face avant, un second module dit « géométrique » en fixant le renfort de peau de pare-choc sur la peau de pare-choc, puis on assemble les deux modules à l'avant de la structure d'un véhicule automobile.

EP 1 772 352 A décrit un module avant 10 pré-assemblé comprenant une peau de pare-chocs, des blocs optiques, un renfort de peau de pare-chocs, un absorbeur de chocs, une voie basse et des supports latéraux pour les blocs optiques.

Un but de "invention est de proposer un procédé de construction facilitant la mise en référence de la peau de pare-choc avec les éléments adjacents du véhicule automobile.

A cet effet, l'invention propose un procédé de construction de véhicule automobile, du type précité précité, dans lequel on assemble le renfort de peau de pare-choc et la poutre de pare-choc sous la forme d'un module avant, puis on assemble le module avant à l'extrémité avant du châssis.

Selon d'autres modes de mise en oeuvre, le procédé de construction comprend une ou plusieurs des caractéristiques suivantes, prise(s) isolément ou selon toutes les combinaisons techniquement possibles :
- on assemble la face avant à l'extrémité avant du châssis avant d'assemble le module avant à l'extrémité avant du châssis ;
- on assemble la peau de pare-choc à l'extrémité avant du châssis après avoir assemblé le module avant à l'extrémité avant du châssis ;
- on assemble des blocs optiques à l'extrémité avant du châssis en les fixant sur des bras de support du renfort de peau de pare-choc ;
- chaque bras de support est flexible pour permettre un ajustement en hauteur et/ou en profondeur de la position du bras de support lors de l'assemblage du module avant sur le châssis ;
- on assemble le renfort de peau de pare-choc et la poutre de pare-choc en fixant le renfort de peau de pare-choc sur une traverse de pare-choc de la poutre de pare-choc et/ou sur des platines de fixation de la poutre de pare-choc sur le châssis disposées aux extrémités arrière d'absorbeurs de la poutre de pare-choc s'étendant vers l'arrière à partir des extrémités latérales de la traverse de pare-choc.

L'invention concerne également un module avant constituant un sous-ensemble d'un bloc avant de véhicule automobile, comprenant un renfort de peau de pare-choc destiné à être recouvert par un peau de pare-choc et à fournir un appui pour cette peau de pare-choc, et une poutre de pare-choc assemblés avant d'assembler le module avant à l'extrémité avant du châssis d'un véhicule automobile.

Selon un mode de réalisation, le renfort de peau de pare-choc est fixé sur une traverse de pare-choc de la poutre de pare-choc.

Selon un mode de réalisation, le renfort de peau de pare-choc est fixé sur des platines de fixation de la poutre de pare-choc sur le châssis disposées aux extrémités arrière d'absorbeurs de la poutre de pare-choc s'étendant vers l'arrière à partir des extrémités latérales d'une traverse de pare-chocs de la poutre de pare-chocs.

L'invention et ses avantages seront mieux compris à la lecture de la description qui va suivre, donnée uniquement à titre d'exemple, et faite en se référant aux dessins annexés, sur lesquels :
- la figure 1 est une vue schématique en perspective éclatée d'un bloc avant de véhicule automobile ;
- la figure 2 est une vue schématique en perspective éclatée d'un sous-ensemble du bloc avant de la figure 1 ;
- les figures 3 à 5 sont des vues en section du sous-ensemble module de la figure 2 après assemblage, dans différents plans de section.

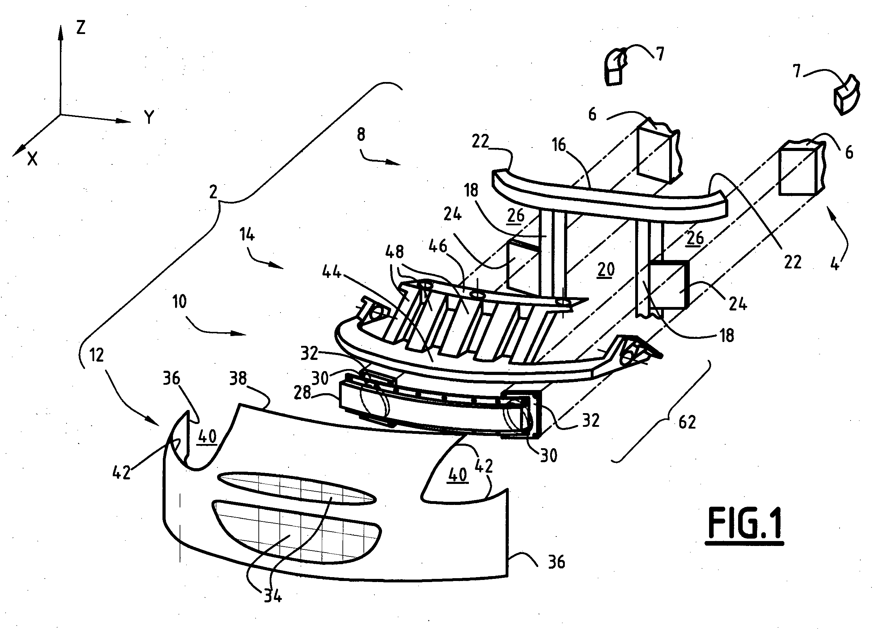

Tel que représenté sur la figure 1, un bloc avant 2 est destiné à être fixé à l'avant de la structure 4 (ou châssis) d'un véhicule automobile, et en particulier aux extrémités avant d'une paire de longerons avant inférieurs 6 et d'une paire de longerons avant latéraux 7 de cette structure 4.

La structure 4 n'a pas été représentée dans son ensemble sur la figure 1. Seules les extrémités avant des longerons 6 et 7 sont représentées.

Les longerons inférieurs 6 et les longerons latéraux 7 délimitent un compartiment moteur. Les longerons inférieurs 6 s'étendent sous ce compartiment. Les longerons 7 s'étendent sur le côté, et sont destinés à recevoir les ailes avant.

Dans la suite de la description, les termes d'orientation s'étendent par référence au repère orthogonal usuel des véhicules automobiles représenté sur la figure 1, et comprenant, un axe longitudinal X, horizontal et dirigé de l'arrière vers l'avant, un axe transversal Y, horizontal et dirigé de la droite vers la gauche, et un axe vertical Z, dirigé du bas vers le haut.

Le bloc avant 2 comprend une face avant 8, une poutre de pare-choc 10, une peau de pare-choc 12, et un renfort de peau de pare-choc 14.

La face avant 8 est prévue notamment pour supporter des équipements d'un système de refroidissement.

La face avant 8 comprend une traverse de face avant 16 et deux montants 18 s'étendant verticalement vers le bas à partir de la traverse 16 et définissant entre eux un espace 20 de réception pour un radiateur, un condensateur et/ou un groupe moto-ventilateur (GMV) du système de refroidissement.

La traverse 16 comprend des portions d'extrémité 22 s'étendant à partir des montants 18 latéralement vers l'extérieur et vers l'arrière. Chaque portion d'extrémité 22 est destiné à être fixée à l'extrémité avant d'un longeron latéral 7.

Chaque montant 18 comprend une extension 24 s'étendant latéralement vers l'extérieur pour la fixation du montant 18 sur les extrémités avant des longerons inférieurs 6.

Chaque extension 24 définit avec la portion d'extrémité 22 adjacente un espace 26 de réception d'un bloc optique (non représenté).

La poutre de pare-choc 10 est disposée devant la face avant 8, et est destinée à absorber tout ou partie de l'énergie résultant de chocs frontaux subis par le véhicule automobile.

La poutre de pare-choc 10 comprend une traverse de pare-choc 28, deux absorbeurs 30 et des platines 32 de fixation de la poutre de pare-chocs 10 sur la face avant 8.

Chaque absorbeur 30 s'étend longitudinalement vers l'arrière à partir d'une extrémité respective de la traverse de pare-choc 28. Chaque absorbeur 30 définit par exemple un logement de réception d'un matériau possédant des propriétés d'absorption d'énergie, comme une mousse haute densité ou un matériau en nid d'abeille.

Chaque platine 32 est disposée à une extrémité arrière d'un absorbeur 30, et comprend des moyens de fixation sur les extrémités des longerons 6 et/ou sur un des extensions 22.

La peau de pare-chocs 12 a pour fonction de masquer la face avant 8 et la poutre de pare-choc 10, et de guider l'air à l'avant du véhicule automobile.

La peau de pare-chocs 12 comprend deux ouvertures 34 pour le passage d'air vers les équipements portés par la face avant 8.

La peau de pare-chocs 12 comprend deux bords latéraux 36 destinés à s'étendre le long de bords avant d'ailes latérales de véhicule automobile, et un bord supérieur 38 sensiblement horizontal destiné à s'étendre le long d'un bord avant d'un capot moteur.

La peau de pare-chocs 12 comprend dans sa partie supérieure deux échancrures 40 latérales destinées à recevoir les blocs optiques portés par la face avant 8. La peau de pare-chocs 12 comprend des bords 42 délimitant les échancrures 40, ces bords 42 étant destinés à s'étendre le long des blocs optiques.

Du fait de sa souplesse, la peau de pare-chocs 12 est déformable par simple appui sur sa face externe.

Le renfort 14 a pour fonction de renforcer la peau de pare-choc 12, notamment dans sa partie supérieure. Il est disposé derrière la peau de pare-choc 12, entre celle-ci et la face avant 8, en étant masqué par la peau de pare-choc 12.

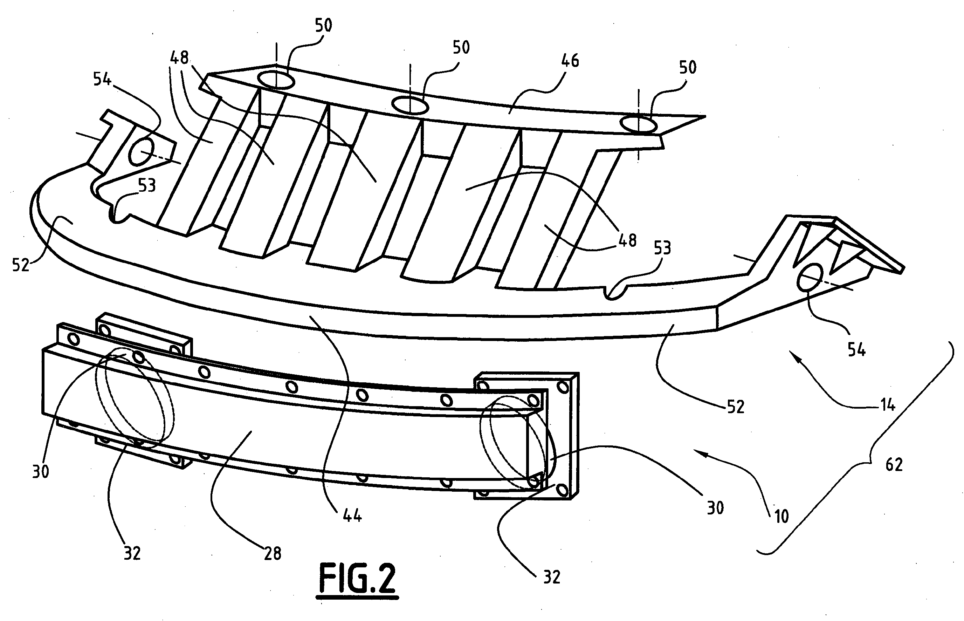

Tel que représenté sur la figure 2, le renfort 14 comprend une traverse inférieure de renfort 44, une traverse supérieure de renfort 46, et une série de jambages 48 s'étendant chacun entre la traverse inférieure 44 et la traverse supérieure 46 et espacés le long de celles-ci.

La traverse supérieure 46 est décalée vers le haut et vers l'arrière par rapport à la traverse inférieure 44. Ainsi, chaque jambage 48 s'étend obliquement, vers le haut et vers l'arrière à partir de la traverse inférieure 44.

La traverse supérieure 46 est destinée à être fixée le long de la traverse de face avant 16 (figure 1), et comprend à cet effet des orifices 50 de fixation, pour le passage par exemple de vis ou de rivets.

Le renfort 14 comprend deux bras 52 chacun destiné à supporter un bloc optique. Chaque bras 52 s'étend latéralement vers l'extérieur à partir d'une extrémité respective de la traverse inférieure 44.

Chaque bras 52 est flexible, pour permettre la mise en référence de ce bras et du bloc optique qu'il supporte avec les éléments adjacents (peau de pare choc 12, ailes avant, capot moteur).

A cet effet, dans l'exemple illustré, chaque bras 52 comprend à sa base une encoche 53 verticale augmentant la flexibilité du bras 52 dans un plan horizontal, et présente une section de faible hauteur pour conférer au bras 52 une certaine flexibilité dans un plan vertical.

Ainsi, chaque bras 52 peut se déplacer verticalement pour un réglage en hauteur, et horizontalement pour un réglage en profondeur.

Chaque bras 52 comprend des moyens de fixation de son extrémité latérale extérieure à la structure 4, par exemple sur un longeron latéral 7. A cet effet, chaque bras 52 comprend un orifice 54 pour le passage d'un organe de fixation tel qu'une vis ou un rivet.

En revenant à la figure 1, le renfort 14 est destiné à supporter la partie supérieure de la peau de pare-chocs 12 s'étendant entre les échancrures 40.

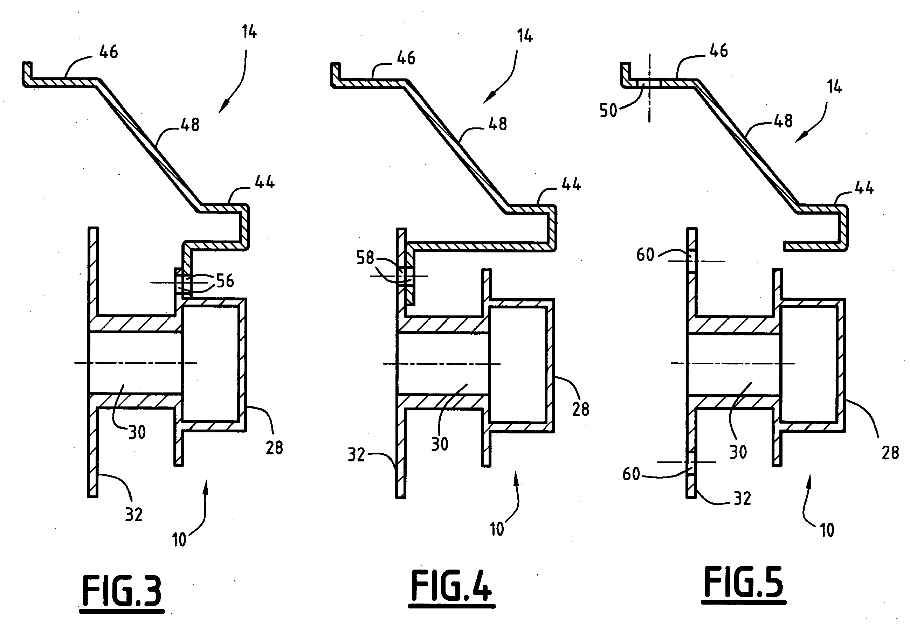

Le renfort 14 est prévu pour être fixé sur la poutre de pare-chocs 10. Ainsi, tel que représentée sur la figure 3, la traverse inférieure 44 et la traverse de pare-choc 28 possèdent des orifices 56 pour le passage d'organes de fixation tel que des vis ou des rivets. Tel que représenté sur la figure 4, en variante ou en option, le traverse inférieure 44 et les platines 32 possèdent des orifices 58 correspondantes pour le passage d'organes de fixation tel que des vis ou des rivets.

Le renfort 14 et la poutre de pare-choc 10 sont destinés à être fixés sur la face avant 8 et/ou la structure 4. A cet effet, telles que représentées sur la figure 5, les platines 32 possèdent des orifices 60 pour le passage d'organes de fixation tel que des vis ou des rivets, en vue de la fixation des platines 32 sur les extensions 22 ou les extrémités avant des longerons 6 inférieurs (figure 1). En outre, la traverse supérieure 46 possède les orifices 50 pour sa fixation sur la face avant 8.

En se référant à la figure 1, pour la construction d'un véhicule automobile, on assemble à l'avant de la structure 4, la face avant 8, la poutre de pare-choc 10, la peau de pare-chocs 12 et le renfort de peau de pare-choc 14.

Selon un aspect de l'invention, on forme un module avant 62 en assemblant le renfort de peau de pare-choc 14 et la poutre de pare-choc 10 avant de fixer ce module avant sur la structure 4, puis de fixer la peau de pare-choc 12 à l'avant du véhicule.

La face avant 8 est fixée sur la structure 4 avant de fixer le module avant 62 sur la structure 4, car la face avant 8 est prise en sandwich entre la structure 4 et le module avant.

La peau de pare-choc 12 est fixée sur le renfort 14, sur la structure 4, et/ ou sur les ailes assemblées préalablement sur la structure 4, après la fixation du module avant 62 sur la structure 4.

Avantageusement, le renfort 14 et la poutre de pare-choc 10 sont préassemblés sur un premier site propre à un sous-traitant, puis le module avant 62 est transporté sur un deuxième site, propre à un constructeur automobile, où le module avant 62 est assemblé à l'avant d'une structure de véhicule automobile dans une chaîne d'assemblage.

Le renfort 14 adopte sa forme géométrie définitive lors de sa fixation sur la structure 4, en fonction des tolérances de fabrication et d'assemblage de la face avant 8 et de la structure 4.

En particulier, les bras 52 flexibles fixés à leurs extrémités libres sur la structure 4, se plient en fonction de la géométrie de la structure 4. Il en résulte que les jeux entre les blocs optiques et les ailes et/ou le capot moteur sont mieux maîtrisés.

Lors de sa fixation, la peau de pare-chocs 12 est souple et se déforme facilement en fonction de la géométrie du véhicule, plus facilement que si le renfort 14 était déjà fixé sur la peau de pare-chocs 12. La maîtrise des jeux entre la peau de pare-chocs 12 est les éléments adjacents s'en trouve améliorée.

L'assemblage du module avant permet de rigidifier le renfort 14 avant sa fixation sur la structure 4. Il est ainsi possible de prévoir un renfort 14 moins rigide en lui-même, ce qui permet de faire des économies de poids et de réduire le coût de fabrication, tout en assurant la fonction de renfort de la peau de pare-choc 12, et en permettant la mise en référence de la peau de pare-choc 12.

## Revendications

1. Procédé de construction d'un véhicule automobile, du type dans lequel on assemble à l'extrémité avant d'un châssis (4) de véhicule automobile une face avant (8) destinée à supporter un radiateur et/ou un groupe moto-ventilateur, une poutre de pare-choc avant (10), une peau de pare-choc (12) et un renfort de peau de pare-choc (14) destiné à être recouvert par la peau de pare-choc (12) et à fournir un appui pour la peau de pare-choc (12),
dans lequel on assemble le renfort de peau de pare-choc et la poutre de pare-choc (10) sous la forme d'un module avant (62), puis on assemble le module avant à l'extrémité avant du châssis.

2. Procédé de construction selon la revendication 1, dans lequel on assemble la face avant (8) à l'extrémité avant du châssis (4) avant d'assembler le module avant (62) à l'extrémité avant du châssis (4).

3. Procédé de construction selon la revendication 1 ou 2, dans lequel on assemble la peau de pare-choc (12) à l'extrémité avant du châssis (4) après avoir assemblé le module avant (62) à l'extrémité avant du châssis (4).

4. Procédé de construction selon l'une quelconque des revendications précédentes, dans lequel on assemble des blocs optiques à l'extrémité avant du châssis (4) en les fixant sur des bras de support (52) du renfort de peau de pare-choc (14).

5. Procédé de construction selon la revendication 4, dans lequel chaque bras de support (52) est flexible pour permettre un ajustement en hauteur et/ou en profondeur de la position du bras de support (52) lors de l'assemblage du module avant sur le châssis (4).

6. Procédé de construction selon l'une quelconque des revendications précédentes, dans lequel on assemble le renfort de peau de pare-choc (14) et la poutre de pare-choc (10) en fixant le renfort de peau de pare-choc (14) sur une traverse de pare-choc (32) de la poutre de pare-choc (10) et/ou sur des platines (32) de fixation de la poutre de pare-choc (10) sur le châssis (4) disposées aux extrémités arrière d'absorbeurs (30) de la poutre de pare-choc (10) s'étendant vers l'arrière à partir des extrémités latérales de la traverse de pare-choc (32).

7. Module avant (62) constituant un sous-ensemble d'un bloc avant (2) de véhicule automobile, **caractérisé en ce qu'**il comprend un renfort de peau de pare-choc (14) destiné à être recouvert par un peau de pare-choc (12) et à fournir un appui pour cette peau de pare-choc (12), et une poutre de pare-choc (10) assemblés avant d'assembler le module avant (62) à l'extrémité avant du châssis (4) d'un véhicule automobile.

8. Module (62) selon la revendication 7, dans lequel le renfort de peau de pare-choc (14) est fixé sur une traverse de pare-choc (32) de la poutre de pare-choc (10).

9. Module (62) selon la revendication 7 ou 8, dans lequel le renfort de peau de pare-choc (14) est fixé sur des platines (32) de fixation de la poutre de pare-choc (10) sur le châssis (4) disposées aux extrémités arrière d'absorbeurs (30) de la poutre de pare-choc (10) s'étendant vers l'arrière à partir des extrémités latérales d'une traverse de pare-choc (32) de la poutre de pare-chocs (10).

## Claims

1. Method of constructing an automotive vehicle, of the type whereby a front face (8) designed to support a radiator and/or a motor-fan unit, a front bumper beam (10), a bumper skin (12) and a bumper skin reinforcement (14) designed to be covered by the bumper skin (12) and afford a support for the bumper skin (12) are fitted on the front end of an automotive vehicle chassis (4),
whereby the bumper skin reinforcement and the bumper beam (10) are assembled in the form of a front module (62) and the front module is then fitted on the front end of the chassis.

2. Construction method as claimed in claim 1, whereby the front face (8) is fitted on the front end of the chassis (4) before fitting the front module (62) on the front end of the chassis (4).

3. Construction method as claimed in claim 1 or 2, whereby the bumper skin (12) is fitted on the front end of the chassis (4) after having fitted the front module (62) on the front end of the chassis (4).

4. Construction method as claimed in any one of the preceding claims, whereby optical blocks are fitted on the front end of the chassis (4) by securing them to support arms (52) of the bumper skin reinforcement (14).

5. Construction method as claimed in claim 4, whereby each support arm (52) is flexible to permit an adjustment in height and/or in depth of the position of the support arm (52) during fitting of the front module on the chassis (4).

6. Construction method as claimed in any one of the preceding claims, whereby the bumper skin reinforcement (14) and the bumper beam (10) are assembled by securing the bumper skin reinforcement (14) to a bumper cross-member (32) of the bumper beam (10) and/or to plates (32) for mounting the bumper beam (10) on the chassis (4) disposed at the absorber rear ends (30) of the bumper beam (10) expending towards the rear from the side ends of the bumper cross-member (32).

7. Front module (62) constituting a sub-assembly of an automotive vehicle front block (2), **characterised in that** it comprises a bumper skin reinforcement (14) designed to be covered by a bumper skin (12) and to afford a support for this bumper skin (12) and a bumper beam (10) assembled before fitting the front module (62) on the front end of the chassis (4) of an automotive vehicle.

8. Module (62) as claimed in claim 7, in which the bumper skin reinforcement (14) is secured to a bumper cross-member (32) of the bumper beam (10).

9. Module (62) as claimed in claim 7 or 8, in which the bumper skin reinforcement (14) is secured to plates (32) for mounting the bumper beam (10) on the chassis (4) disposed at the absorber rear ends (30) of the bumper beam (10) expending towards the rear from side ends of a bumper cross-member (32) of the bumper beam (10).

## Patentansprüche

1. Verfahren zum Bau eines Kraftfahrzeugs von der Art, in dem am Vorderende eines Kraftfahrzeugchassis (4) eine Vorderseite (8) angebracht wird, die dazu dient, einen Kühler und/oder einen Lüftersatz, einen vorderen Stoßstangenträger (10), eine Stoßstangenverkleidung (12) und eine Verstärkung (14) der Stoßstangenverkleidung, die dazu bestimmt ist, von der Stoßstangenverkleidung (12) bedeckt zu werden und der Stoßstangenverkleidung (12) eine Stütze zu bieten, zu tragen,
in dem die Verstärkung der Stoßstangenverkleidung und der Stoßstangenträger (10) zu einem Frontmodul (62) zusammengesetzt und das Frontmodul mit dem Vorderende des Chassis zusammengesetzt wird.

2. Bauverfahren nach Patentanspruch 1, in dem die Vorderseite (8) mit dem Vorderende des Chassis (4) zusammengesetzt wird, bevor das Frontmodul (62) mit dem Vorderende des Chassis (4) zusammengesetzt wird.

3. Bauvertahren nach Patentanspruch 1 oder 2, in dem die Stoßstangenverkleidung (12) mit dem Vorderende des Chassis (4) zusammengesetzt wird, nachdem das Frontmodul (62) mit dem Vorderende des Chassis (4) zusammengesetzt wurde.

4. Bauverfahren nach irgendeinem der vorangehenden Patentansprüche, in dem die Scheinwerferblöcke mit dem Vorderende des Chassis (4) zusammengesetzt werden, indem sie auf Stützarmen (52) der Verstärkung (14) der Stoβstangenverkleidung befestigt werden.

5. Bauverfahren nach Patentanspruch 4, in dem jeder Stützarm (52) flexibel ist, um bei der Montage des Frontmoduls am Chassis (4) eine Justierung der Stellung des Stützarmes (52) in Höhe und/oder Tiefe zu ermöglichen.

6. Bauverfahren nach irgendeinem der vorangehenden Patentansprüche, in dem die Verstärkung (24) der Stoßstangenverkleidung und der Stoßstangentrager (10) zusammengesetzt werden, indem die Verstärkung (14) der Stoβstangenverkleidung auf einem Stoßstangenquerträger (32) des Stoßstangenträgers (10) und/oder auf Platten (32) zur Befestigung des Stoßstangenträgers (10) am Chassis (4), die an den Hinterenden von Absorbern (30) des Stoßstangenträgers (10) angeordnet sind und sich von den Seitenenden des Stoßstangenquerträgers (32) nach hinten erstrecken, befestigt wird.

7. Frontmodul (62) als Untereinheit eines Kraftfahrzeug Frontblockes (2), **dadurch gekennzeichnet, dass** es eine Verstärkung (14) einer Stoßstangenverkleidung umfasst, die dazu bestimmt ist, von der Stoβstangenverkleidung (12) bedeckt zu werden und der Stoßstangenverkleidung (12) eine Stütze zu bieten, und einen Stoßstangenträger (10), die zusammengesetzt werden, bevor das Frontmodul (62) mit dem Vorderende des Chassis (4) eines Kraftfahrzeugs zusammengesetzt wird.

8. Frontmodul (62) nach Patentanspruch 7, in dem die Verstärkung (14) der Stoßstangenverkleidung auf einem Stoßstangenquerträger (32) des Stoßstangenträgers (10) befestigt ist.

9. Frontmodul (62) nach Patentanspruch 7 oder 8, in dem die Verstärkung (14) der Stoßstangenverkleidung auf Platten (32) zur Befestigung des Stoßstangenträgers (10) am Chassis (4), die an den Hinterenden von Absorbern (30) des Stoßstangenträgers (10) angeordnet sind und sich von den Seitenenden eines Stoβstangenquerträgers (32) des Stoßstangenträgers (10) nach hinten erstrecken, befestigt wird.
